Europäisches Patentamt

**European Patent Office**

**Office européen des brevets**

(11) Veröffentlichungsnummer: **0 181 584**
**B1**

(12) **EUROPÄISCHE PATENTSCHRIFT**

(45) Veröffentlichungstag der Patentschrifft:
21.03.90

(21) Anmeldenummer: 85113946.9

(22) Anmeldetag: 02.11.85

(51) Int. Cl.⁵: **F 16 B 7/16, A 47 F 7/24, A 47 F 7/19**

(54) **Höhenverstellbarer Polygonsäulen-Kleiderpräsentierständer.**

(30) Priorität: 14.11.84 CH 5451/84

(43) Veröffentlichungstag der Anmeldung:
21.05.86 Patentblatt 86/21

(45) Bekanntmachung des Hinweises auf die Patenterteilung:
21.03.90 Patentblatt 90/12

㊽ Bennante Vertragsstaaten:
AT BE CH DE FR GB LI NL

(56) Entgegenhaltungen:
FR-A-1 327 951
FR-A-1 330 450
GB-A-201 344
US-A-2 380 632

(73) Patentinhaber: **Fehlbaum & Co.**
**Unterdorfstrasse 21**
**CH-4143 Dornach (CH)**

(72) Erfinder: **Korth, Bernd**
**Bühlstrasse 54**
**D-7858 Weil am Rhein (DE)**

(74) Vertreter: **Gehrig, Peter**
**A. Braun, Braun, Héritier, Eschmann AG Holbeinstrasse 36-38**
**CH-4051 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 181 584 B1

LIBERGRAF, STOCKHOLM 1990

## Beschreibung

Die Erfindung betrifft einen höhenverstellbaren Polygonsäulen-Kleiderpräsentierständer nach dem Oberbegriff des Patentanspruchs 1.

Kleiderpräsentierständer dieser Art sind vorzugsweise für die Präsentierung von Kleidungsstücken in Verkaufsräumen bestimmt, wo die richtige Höhenlage des Objektes für den Kaufanreiz von wesentlicher Bedeutung ist. Aus der GB-A-201 344, die als nächstliegender Stand der Technik anzusehen ist, ist bekannt, für die Höhenverstellung Teleskoprohranordnungen zu verwenden, bei welchen im Innern eines fußgestützten Standrohres eine Auszugsäule vertikal beweglich angeordnet und durch eine Arretiervorrichtung in der Form einer Steckzapfenvorrichtung in der gewünschten Höhenlage festlegbar ist. Ferner ist aus der CH-A-617 078 ein Kleiderpräsentierständer bekannt, bei dem die Arretiervorrichtung in der Form eines stufenlos einstellbaren Keilgesperres vorliegt. Während Keilgesperre zwar mit Ausnahme des Betätigungsgliedes vollständig innerhalb der Teleskopanordnung angeordnet werden können und somit von außen unsichtbar sind, erfordern sie einen erheblichen technischen Aufwand, wenn sie neben einer zuverlässigen Halterung auch eine leichte Verstellbarkeit bieten sollen. Steckzapfenvorrichtungen dagegen vermögen vor allem in ästhetischer Hinsicht nicht zu genügen; außerdem sind sie bei unsachgemäßer Betätigung, vor allem wenn dies im belasteten Zustand der Auszugsäule möglich ist, unfallgefährlich.

Die durch die Erfindung zu lösende Aufgabe besteht daher darin, einen höhenverstellbaren Polygonsäulen-Kleiderpräsentierständer zu schaffen, bei dem die genannten Nachteile vermeidbar sind. Insbesondere soll der zu schaffende Kleiderpräsentierständer mit einer Höhenverstelleinrichtung versehen sein, die eine zuverlässig indexierbare Höhenverstellung der Auszugsäule ermöglicht, unter Belastung praktisch nicht betätigbar ist, und als einfacher, übersichtlich gestalteter bedienungsfreundlicher Bauteil herstellbar ist.

Die erfindungsgemäße Lösung dieser Aufgabe ist durch die kennzeichnenden Merkmale des Patentanspruchs 1 definiert. Ausführungsformen davon gehen aus den abhängigen Ansprüchen hervor.

Die vorgeschlagene Lösung ermöglicht neben einer rationellen Gestaltung der Höhenverstelleinrichtung und der Auszugsäule auch, eine einfache übersichtliche Handhabung derselben zu erzielen.

Der Erfindungsgegenstand ist nachstehend anhand eines Ausführungsbeispiels gemäß der Zeichnung beschrieben. Es zeigt:

- Fig. 1a - c verschiedene Ausführungsformen des erfindungsgemässen Kleiderpräsentierständers mit Einzel- und Mehrfachstandrohren und Stab- und Bügelauslegern,
- Fig. 2a - c die Arretiervorrichtung, ein Standrohr und eine Auszugsäule des Kleiderpräsentierständers nach Fig. 1( a - c) im Vertikalschnitt,
- Fig. 3 eine Grundrissdarstellung in Blickrichtung III - III nach Fig. 2a, und
- Fig 4 eine vergrößerte Partialdarstellung des Sperreingriffs zwischen Standrohr und Arretiervorrichtung.

In den Figuren bezeichnen gleiche Referenznummern gleiche oder identische Bauteile der verschiedenen Ausführungsformen.

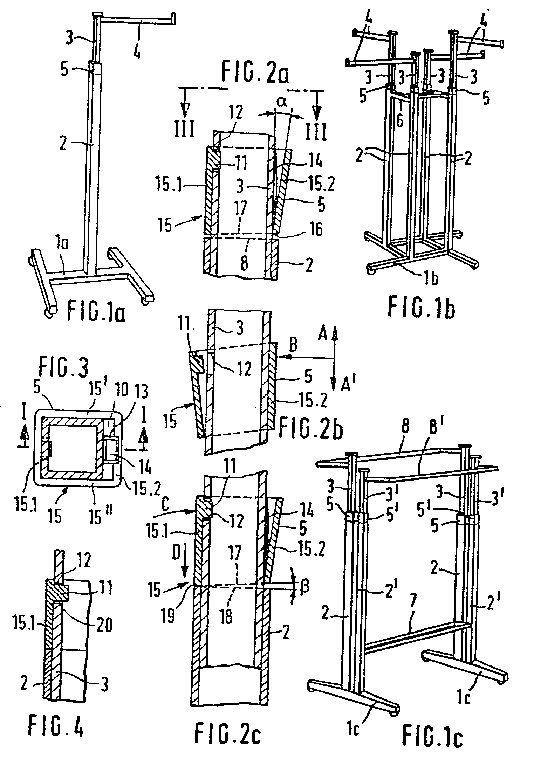

Der in Fig. 1a dargestellte Kleiderpräsentierständer enthält ein auf einem H-Tragfuss 1a stehendes Einzel-Standrohr 2, in das eine Auszugsäule 3 vertikal bewegbar eingesetzt ist. Letztere ist nach den Fig. 2a - c gestaltet und trägt an ihrem obern Ende eine Traganordnung in der Form eines Auslegers 4. Eine Arretiervorrichtung 5, deren Gestaltung ebenfalls aus den Fig. 2a - c und ferner aus Fig. 3 hervorgeht, dient der Höhenfixierung der Auszugsäule 3 relativ zum Standrohr 2. Der Einfachheit halber sind das Standrohr 2 und die Auszugsäule 3 in den Fig. 1a - c, 2a - c und 3 als Vierkantrohre gezeigt. Ebenso sind die beispielsweise aus Rohrprofilen aufgebauten Tragfüsse in den Fig. 1a und 1b, als aus Vierkant-Rohrprofilen bestehend gezeigt, obschon hierfür auch andere Polygonprofilrohre verwendet werden könnten.

Fig. 1b zeigt einen Kleiderpräsentierständer, bei dem auf einem zusammengesetzten Tragfuß 1b eine aus vier Einzelstandrohren 2 bestehende Stützanordnung aufgebaut ist. Die Standrohre 2 können nächst ihrem obern Ende durch Traversen 6 miteinander verbunden sein. In jedes der Standrohre 2 ist eine Auszugsäule 3 eingesetzt, an deren oberem Ende je eine Traganordnung in der Form eines Auslegers 4 aufgebaut ist. Die Auszugsäulen 3 sind wiederum durch je eine Arretiervorrichtung 5 in ihrer relativen Höhenlage fixiert.

Fig. 1c zeigt einen Kleiderpräsentierständer, bei dem auf einer in zwei Fußteile 1c, 1c aufgegliederten Bodenstütze je eine Anordnung von zwei Standrohren 2, 2' aufgesetzt sind. Die Rohre 2 jeder Anordnung sind in Längsrichtung auf nicht gezeigte Weise im Abstand gehalten und die beiden Anordnungen sind vorzugsweise in Fußnähe durch eine Traverse 7 voneinander auf Ständerbreite auseinander gehalten. Zu jedem der Standrohre 2, 2' der beiden Standrohranordnungen ist, gestützt von je einer Arretiervorrichtung 5 bzw. 5', je eine Auszugsäule 3 bzw. 3' angeordnet. Die jeweils korrespondierenden Auszugsäulen 3 bzw. 3' der beiden Standrohranordnungen sind mittels je einem Tragbügel 8, 8' zu einer Zweisäulen-Traganordnung miteinander verbunden. Die Arretiervorrichtungen 5 5' gestatten, die beiden Traganordnungen auf gegenseitig beliebigen Höhenlagen zu fixieren.

In Fig. 2a ist der Eingriff der Arretiervorrichtung 5 zwischen dem Standrohr 2 und der Auszugsäule 3 in einer ersten Ruhe- bzw. Betriebsstellung dargestellt. Wie auch aus Fig. 3 hervorgeht, übergreift die Arretiervorrichtung 5, die im gezeigten Beispiel einen Mantelkörper 15 mit einem von zwei parallel zu den benachbarten Wänden der Auszugsäule 3 verlaufenden Seitenwänden 15', 15" sowie einer Rückwand 15.1 und einer Stirnwand 15.2 gebildeten Durchlass 10 aufweist, die Auszugsäule 3 in der Art einer Hülse. Die Rückwand 15.1 trägt auf ihrer Innenseite ein Zapfenglied 11, das in eine von mehreren im Abstand längs der zugewandten Wand der Auszugsäule 3 angebrachten Ausnehmungen 12 einzugreifen bestimmt ist. Die nach oben unter einem Winkel $\alpha$ von etwa 10 - 15° divergierende Stirnwand 15.2 enthält eine auf eine Nute 13 auf ihrer Innenseite ausgerichtete und nächst dem untern Rand der Stirnwand 15.2 darin befestigte Blattfeder 14. Diese ist so gegen die Auszugsäule 3 hin angebogen, daß sie den Mantelkörper 15 um die Stirnwand-Unterkante 16 von der Auszugsäule 3 wegzudrehen trachtet. Dadurch wird die Rückwand 15.1 gegen die anliegende Wand der Auszugsäule 3 gedrängt, und das Zapfenglied 11 greift kraftschlüssig in die bezügliche Ausnehmung 12 ein. Der untere Rand 17 des Mantelkörpers 15 liegt dabei auf dem oberen Ende 18 des Standrohres 2 auf. Damit ist die Auszugsäule 3 in ihrer Höhenlage am Standrohr 2 festgelegt. Das Zapfenglied 11 greift so in die Auszugsäulen-Ausnehmung 12 ein, daß ein zufälliges oder fehlerhaftes Ausrasten bei belasteter Auszugsäule 3 praktisch ausgeschlossen ist. Zu diesem Zweck kann beispielsweise die Unterseite des Zapfengliedes 11 leicht in Einhakrichtung geneigt gestaltet sein. Eine weitere Ausführungsvariante dazu ist später noch beschrieben.

Will man nun die Höhenlage der Auszugsäule 3 relativ zum Standrohr 2 ändern, so wird gemäß Fig. 2b die Auszugsäule 3 zunächst in Richtung des Pfeiles A angehoben. Dann wird unter Überwindung der Vorspannung der Blattfeder 14 die Stirnwand 15.2 des Mantelkörpers 15 in Anlage mit der benachbarten Wand der Auszugsäule 3 gedrängt (Pfeilrichtung B). Das Zapfenglied 11 gelangt dadurch außer Eingriff mit der initial benützten Durchbrechung 12 und die Auszugsäule 3 kann gemäß den Pfeilen A bzw. A' im Standrohr 2 frei auf- oder abwärts bewegt werden. Ebenso kann die Arretiervorrichtung 5 längs der der Auszugsäule 3 auf- oder abwärts verschoben werden.

Sobald die gewünschte Höhenlage der Auszugsäule 3 im Standrohr 2 ungefähr erreicht ist, wird der Andruck (Pfeil B) auf die Arretiervorrichtung 5 aufgehoben. Dadurch gelangt das Zapfenglied 11 in Anlage mit der benachbarten Säulenwand, in welcher sich die Durchbrechungen 12 befinden. Beim Verschieben der Arretiervorrichtung 5 in Richtung der nächstliegenden Ausnehmung 12 gelangt das Zapfenglied 11 durch Einschnappen (Pfeilrichtung C in Fig. 2c) in diese Ausnehmung, in eine neue Einrastposition. Hierauf wird die Auszugsäule 3 samt der Arretiervorrichtung 5 in Pfeilrichtung D bis auf das obere Ende des Standrohres 2 in eine weitere Ruhe- bzw. Betriebsstellung abgesenkt, wobei das untere Ende der Arretiervorrichtung 5 auf dem oberen Ende des Standrohres 2 zur Auflage gelangt.

Als zusätzliche Sicherung des Eingriffs der Arretiervorrichtung 5 an der Auszugsäule 3 ist es zweckmässig, die Anschlagebene am untenliegenden Rand 17 des Mantelkörpers 15 gegen die Stirnwand 15.2 hin um einen Winkel $\beta$ von 3 - 5° anzuheben. Dadurch ergibt sich beim initialen Anschlagen der Mantelkörper-Rückwand 15.1 am oberen Ende 18 des rechtwinklig beschnittenen Standrohres 2 ein Drehpunkt 19, um welchen infolge des Schiebe-Spielabstandes zwischen Auszugsäule 3 und Arretiervorrichtung 5 letztere nach der Stirnseite 15,1 hin kippt. Das Zapfenglied 11 neigt sich dadurch ebenfalls vornüber, wodurch sich praktisch eine Zwangssperre zwischen Zapfenglied 11 und Durchbrechung 12 ergibt. Die Zwangssperre kann durch eine leichte Hinterschneidung 20 auf der Unterseite des Zapfengliedes 11 ausgeprägt gestaltet sein.

**Patentansprüche**

1. Höhenverstellbarer Polygonsäulen-Kleiderpräsentierständer mit einer ein- oder mehrteiligen Fußanordnung und einer Standrohranordnung aus einem Einzelstandrohr oder einem Standrohrverband aus einer Anzahl voneinander auf Abstand stehender Einzelstandrohren, wobei in jedes Einzelstandrohr eine mit einer Auslegeranordnung versehene Auszugsäule teleskopisch eingesetzt ist und zwischen jedem Einzelstandrohr und der zugehörigen Auszugsäule eine Höhenverstelleinrichtung zur Festlegung der relativen Höhenstellung der Auszugsäule im Standrohr vorhanden ist, die eine Arretiervorrichtung mit einem hülsenartigen Mantelkörper mit einer diesen auf der Auszugsäule gegen Verdrehung sichernden Durchlaßöffnung und einem Federelement, welches ein Zapfenglied in eine Eingriffsstellung mit der Auszugsäule drängt, aufweist, wobei die Auszugsäule längs einem Wandabschnitt mit einer Anzahl in im wesentlichen gleichen Abständen und aufeinanderfluchtend angeordneten Ausnehmungen versehen ist, und die Durchlaßöffnung des Mantelkörpers von einer das Zapfenglied nächst ihres oberen Randes tragenden Rückwand, einer das Federelement enthaltenden Stirnwand sowie die genannten Wände verbindende Seitenwände begrenzt ist, wobei die Rückwand und die Seitenwände im wesentlichen parallel zu den benachbarten Wandabschnitten der Auszugsäule liegen, dadurch gekennzeichnet, daß die Arretiervorrichtung (5, 5') über die Auszugsäule (3) verschiebbar ist und sich auf dem oberen Ende des Standrohres (2) abstützt, und daß die Stirnwand (15.2) in Aufwärtsrichtung um einen Winkel $\alpha$ gegenüber der benachbarten Auszugsäulenwand divergiert, derart, daß bei Andrücken der Stirnwand (15.2) gegen die genannte Auszugsäulenwand das Zapfenglied (11) aus der bezüglichen Ausnehmung (12) ausrastet.

2. Kleiderpräsentierständer nach Anspruch 1, dadurch gekennzeichnet, daß das Federelement eine auf eine Längsnut (13) in der Stirnwand (15.2) ausgerichtete Blattfeder (14) ist, wobei die Querschnittsabmessungen der Längsnut mindestens denjenigen der Blattfeder entsprechen.

3. Kleiderpräsentierständer nach Anspruch 1, dadurch gekennzeichnet, daß das untere Ende (17) des Mantelkörpers (15) auf einer Ebene liegt, die gegenüber der Ebene durch das obere Ende der Tragsäule (2) von der Rückwand (15.1) zur Stirnwand (15.2) um einen Winkel (β) von 3 - 5° divergiert.

4. Kleiderpräsentierständer nach Anspruch 1, dadurch gekennzeichnet, daß das Zapfenglied (11) auf seiner Unterseite mit einer der Innenseite der Rückwand (15.1) am Mantelkörper (15) zugewandten Hinterschneidung (20) versehen ist.

**Claims**

1. Adjustable-height show stand with polygonal columns for garments, with a single- or multi-part foot system and an upright-tube system formed by a single upright tube or upright tube combination consisting of a number of single upright tubes spaced apart, an extensible column provided with an extension arm system being inserted on the telescopic principle in each individual upright tube and a height-adjusting device for securing the extensible column at the required relative height in the upright tube being provided between each individual upright tube and its associated extensible column and having a locking device with a sleeve-like casing body with a passage preventing the latter from rotating on the extensible column as well as a spring element moving a pin member into a position of engagement with the extensible column, a number of recesses situated at largely equal distances apart and aligned with one another being provided along a wall section of the extensible column, the opening in the casing body being delimited by a rear wall bearing the pin member next to its upper edge, a front wall containing the spring element and also by side walls interconnecting the aforementioned walls, the rear wall and the side walls being substantially parallel to the adjacent wall sections of the extension column, characterized by the fact that the locking device (5, 5') is displaceable over the extension column (3) and rests on the top end of the upright tube (2) and that the front wall (15.2) diverges upwards by an angle α in respect of the adjacent wall of the extension column in such a manner that when the front wall of the extension column the pin member (11) disengages from the relevant recess (12).

2. Show stand for garments in accordance with Claim 1, characterized by the fact that the spring element consists of a leaf spring (14) aligned to a longitudinal groove (13) in the front wall (15.2), the cross-sectional dimensions of the longitudinal groove being at least equal to those of the leaf spring.

3. Show stand for garments in accordance with Claim 1, characterized by the fact that the lower end (17) of the casing body (15) rests on a plane which diverges by an angle (β) of 3 - 5° from the plane through the upper end of the supporting column (2) from the rear wall (15.1) to the front wall (15.2).

4. Show stand for garments in accordance with Claim 1, characterized by the fact that the bottom of the pin member (11) is provided with an undercut (20) facing towards the inside of the rear wall (15.1) on the casing body (15).

**Revendications**

1. Présentoir pour vêtements à colonnes polygonales réglables en hauteur comportant un pied en une seule ou en plusieurs pièces et un dispositif tubulaire consistant en un tube vertical individuel ou un ensemble de tubes verticaux distincts dressés à distance l'un de l'autre, chaque tube de support individuel contenant une colonne coulissante montée de façon télescopique et pourvue d'un bras en porte-à-faux et entre chaque tube de support et sa colonne coulissante étant prévu un dispositif de réglage de hauteur destiné à fixer la hauteur relative de la colonne coulissante dans le tube vertical, qui comprend un dispositif d'arrêt comportant une virole en forme de douille présentant une ouverture de passage l'empêchant de se tordre sur la colonne mobile et comprenant un élément ressort qui sollicite un tenon dans une position en prise avec la colonne coulissante, la colonne étant pourvue le long d'une section de paroi de plusieurs évidements ménagés à distance égale l'un de l'autre et en alignement et l'ouverture de passage de la virole étant délimitée par une paroi arrière portant le tenon à proximité de son bord supérieur, par une paroi d'about comprenant l'élément ressort ainsi que par les parois latérales reliant les deux premières, la paroi arrière et les parois latérales étant essentiellement parallèles aux sections de parois voisines des colonnes coulissantes, caractérisé en ce que le dispositif d'arrêt (5, 5') peut coulisser sur la colonne coulissante (3) et repose sur l'extrémité supérieure du tube de support (2) et que la paroi d'about (15.2) diverge vers le haut suivant un angle α par rapport à la paroi voisine de la colonne coulissante de telle sorte que lorsque la paroi d'about (15.2) est pressée contre la paroi de la colonne coulissante, le tenon (11) est dégagé de l'évidement correspondant (12).

2. Présentoir pour vêtements suivant la revendication 1, caractérisé en ce que l'élément ressort est un ressort à lame (14) aligné sur une rainure longitudinale (13) dans la paroi d'about (15.2), les dimensions en coupe transversale de la rainure longitudinale étant au moins égales à celles du ressort à lame.

3. Présentoir pour vêtements suivant la revendication 1, caractérisé en ce que l'extrémité inférieure (17) de la virole (15) se trouve sur un plan qui diverge par rapport au plan passant par l'extrémité supérieure du tube de support (2) depuis la paroi arrière (15.1) jusqu'à la paroi d'about (15.2) suivant un angle β de 3 - 5°.

4. Présentoir pour vêtements suivant la revendication 1, caractérisé en ce que le tenon (11) présente, sur son côté inférieur, une contre-dépouille (20) tournée vers la face intérieure de la paroi arrière (15.1) de la virole (15).

FIG.2a

FIG.1a

FIG.1b

FIG.3

FIG.2b

FIG.4

FIG.2c

FIG.1c